# EUROPEAN PATENT SPECIFICATION

(11) **EP 4 123 910 B1**
(45) Date of publication and mention of the grant of the patent: **24.12.2025**
(21) Application number: 20925364.0
(22) Date of filing: 31.03.2020
(51) Int. Cl.: H04W 68/12, H04W 8/18, H04B 1/401, H04W 8/24, H04W 24/02, H04W 48/18

(54) **INFORMATION INDICATION METHOD AND RELATED PRODUCT**
INFORMATIONSANZEIGEVERFAHREN UND ZUGEHÖRIGES PRODUKT
PROCÉDÉ D'INDICATION D'INFORMATIONS ET PRODUIT ASSOCIÉ

(30) Priority: 18.03.2020 CN 202010191666
(43) Date of publication of application: 25.01.2023
(73) Proprietor: Shenzhen Transsion Holdings Co., Ltd., Shenzhen, Guangdong 518057 (CN)
(72) Inventor: XIA, Xin, Shenzhen, Guangdong 518057 (CN)
(74) Representative: Elzaburu S.L.P.
(86) International application number: PCT/CN2020/082468
(87) International publication number: WO 2021/184422

(56) References cited:
- WO-A1-2012/139755
- CN-A- 101 374 356
- CN-A- 103 200 637
- CN-A- 105 722 163
- CN-A- 105 722 163
- CN-A- 106 559 769
- CN-A- 107 306 434
- CN-A- 108 650 672
- US-A1- 2013 303 203

## Description

The present application claims priority to Chinese Patent Application No. 202010191666.5, filed on March 18, 2020 before China National Intellectual Property Administration, entitled "INFORMATION INDICATION METHOD AND RELATED PRODUCT".

### TECHNICAL FIELD

The present application relates to the field of communication technology, in particular, to an information indication method and a related product.

### BACKGROUND

With the development of communication technology and the popularization of smart terminals, more and more mobile phones support a dual-SIM dual-standby function, and even a multi-SIM multi-standby function. However, due to cost considerations and design requirements, most of the "dual-SIM dual-standby" mobile phones still use one radio frequency (RF) system, and networks corresponding to two SIM cards share a radio frequency resource, such as a single-transmitting single-receiving (1Tx1Rx) terminal, a single-transmitting multiple-receiving terminal, and a multiple-transmitting single-receiving terminal, etc.

Based on this, the radio frequency module of a mobile phone is required to continuously convert the shared radio frequency system between networks corresponding to multiple subscriber identification module cards. This conversion will increase user access delay, and even in some occasions, a user cannot receive important system signaling (such as Paging, etc.) in a timely and effective manner, resulting in serious communication failures, reduced user experience, and waste of communication resources.

US20130303203A1 discloses embodiments contemplate paging and system information broadcast handling for multi-SIM WTRUs using mobile networks to access resources and/or services. Embodiments also contemplate paging and system information broadcast handling for multi-SIM WTRUs and/or non-SIM WTRUs using mobile networks to access virtualized resources and/or services. Embodiments contemplate that a WTRU may determine to monitor a plurality of mobile networks. Paging occasions to monitor at least one of the mobile networks may be based on a common WTRU ID. The WTRU ID may be provided by a node supporting access to the virtualized resources or services. Paging occasions for a first network may be determined by a second network based on paging related parameters and other information of the first communication network. A change in system information of a first network may be signaled to a second network for indication to a WTRU.

CN105722163A discloses a network switching method and system; wherein the method is applied in a dual-card terminal; a first card is in support of an LTE network; a second card is in support of a 3G/2G (The2/3th Generation mobile communication technology) network; the method comprises following steps of in a process that the dual-card terminal uses the first card to carry out an LTE call, determining that the dual-card terminal is about to execute an SRVCC (Single Radio Voice Call Continuity) switching process; applying CS domain network resources demanded when the dual-card terminal executes the SRVCC switching process, wherein the CS domain network resources are applied through the second card of the dual-card terminal instead of the first card; and when the dual-card terminal executes the SRVCC switching process, finishing the SRVCC switching process through adoption of the CS domain network resources applied in advance. According to the method and the system, the purpose of reserving the CS domain network resources demanded for executing the SRVCC switching process in advance.

### SUMMARY

The embodiments of the present application provide an information indication method and a related product, indicating that an operating network conversion event occurs on the terminal, so that a base station can adjust the communication state of the terminal in time, thereby a better configuration of communication resources is achieved, and communication effects are improved for the terminal. The present application is set out in the appended set of claims.

In an embodiment of the present application, after a conversion of an operating network is detected, a multi-SIM terminal generates conversion indication information according to the conversion of the operating network, and sends the conversion indication information to a base station, so that the base station can timely obtain an operating network conversion event that is occurring or is about to occur on the terminal, and adjust a communication state of the terminal according to the conversion indication information. In this way, a better configuration of communication resources can be achieved and communication effects can be improved for the terminal.

### BRIEF DESCRIPTION OF THE DRAWINGS

In order to more clearly describe the embodiments of the present application or the technical solutions in the prior art, the following will briefly introduce the accompanying drawings that need to be used in the description of the embodiments or the prior art. Obviously, the drawings in the following description are only some embodiments of the application and, for those of ordinary skill in the art, other drawings can be obtained based on these drawings without creative work.
FIG. 1 is a schematic structural diagram of an information indication system provided by an embodiment of the present application;
FIG. 2A is a schematic flow diagram of an information indication method provided by an embodiment of the present application;
FIG. 2B is a schematic diagram of a conversion prompt information provided by an embodiment of the present application;
FIG. 3 is a schematic flow diagram of another information indication method provided by an embodiment of the present application;
FIG. 4 is an interactive schematic diagram of an information indication method provided by an embodiment of the present application;
FIG. 5 is a schematic diagram of a functional unit of a terminal provided by an embodiment of the present application;
FIG. 6 is a schematic diagram of a functional unit of a base station provided by an embodiment of the present application; and
FIG. 7 is a schematic structural diagram of an electronic device provided by an embodiment of the present application.

### DESCRIPTION OF EMBODIMENTS

The technical solutions in the embodiments of the present application will be clearly and completely described below in conjunction with the drawings in the embodiments of the present application. Obviously, the described embodiments are only a part of the embodiments of the present application, rather than all of the embodiments. Based on the embodiments in the present application, all other embodiments obtained by those of ordinary skill in the art without creative work are within the protection scope of the present application.

At present, most of the existing "dual-SIM dual-standby" mobile phones still use one radio frequency (RF) system, and networks corresponding to two SIM cards share a radio frequency resource, such as a single-transmitting single-receiving (1TxlRx) terminal, a single-transmitting multiple-receiving terminal, and a multiple-transmitting single-receiving terminal, etc. Therefore, the radio frequency module of a mobile phone is required to continuously convert the shared radio frequency system between the two user networks. This conversion will increase user access delay, and even in some occasions, a user cannot receive important system signaling (such as Paging, etc.) in a timely and effective manner, resulting in serious communication failures, reduced user experience, and waste of communication resources.

In response to the above problems, an embodiment of the present application provides an information indication method, which is applied to a terminal. The following is a detailed introduction in conjunction with the accompanying drawings.

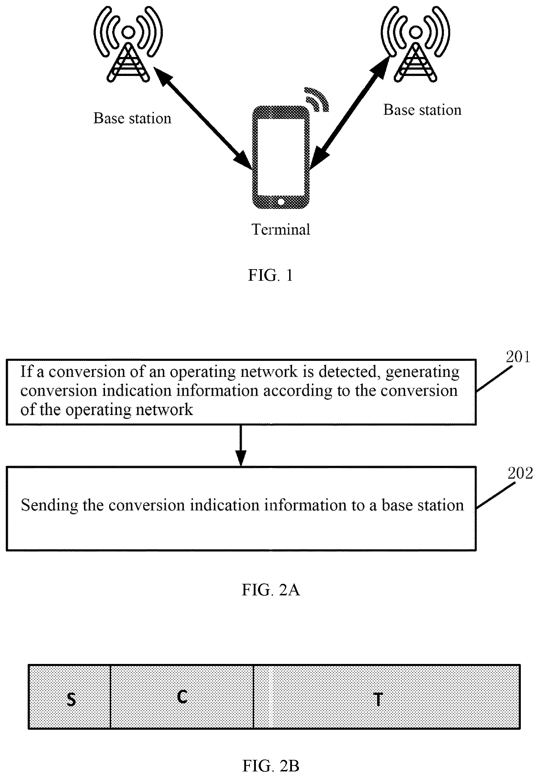

First, reference may be made to FIG. 1 for a schematic structural diagram of an information indication system including at least one base station and one terminal. The terminal includes at least two subscriber identification module cards, and each subscriber identification module card corresponds to an operating network, for example, a first identification card corresponds to a first network, and a second identification card corresponds to a second network. When the terminal is operating, if a service included in the first identification card is currently executed by the first network, after a conversion of an operating network, a service included in the second identification card is executed by the second network. Therefore, the first network and the second network may correspond to a same base station, or may correspond to different base stations. In order to reflect the conversion of the operating network in FIG. 1, two base stations are symbolically shown, but they are not used as a limitation to the following embodiments.

The above-mentioned base station can be used to communicate with one or more terminals, and can also be used to communicate with one or more base stations with partial terminal functions (such as a communication between a macro base station and a micro base station, such as an access point). The base station can be a base transceiver station (BTS) in a time division synchronous code division multiple access (TD-SCDMA) system, an evolutionary node B (eNB) in a long term evolution (LTE) system, a base station gNB in a 5G system or an NR system, or the like, all of which are not enumerated here.

The aforementioned terminal includes, but is not limited to, a device with communication functions, a smart phone, a tablet computer, a notebook computer, a desktop computer, a portable digital player, a smart bracelet, and a smart watch.

The technical solutions of the embodiments of the present application may be implemented specifically based on the communication system of the architecture illustrated in FIG. 1 or its deformed architecture.

Referring to FIG. 2A, FIG. 2A is a schematic flow diagram of an information indication method provided by an embodiment of the present application. This method may include, but is not limited to, the following steps.

201, if a conversion of an operating network is detected, generating conversion indication information according to the conversion of the operating network, where the conversion indication information is used to indicate that an operating network conversion event occurs on the terminal.

Specifically, it can be understood that the detection of the conversion of the operating network may be derived from an external conversion instruction, such as a conversion instruction applied by a user to the terminal; the detection of the conversion of the operating network may also be derived from the inside of the terminal, that is, an indication between modules inside the system when the terminal itself needs to perform the conversion of the operating network. Taking the first network corresponding to the first identification card as the operating network as an example, the terminal can immediately convert the operating network from the first network to the second network after this instruction is received. Alternatively, after the instruction is obtained, the terminal can also perform other operation first, such as judgment, generation, and processing, and then decides whether to convert the operating network. The form of the instruction is not specifically limited here. The generation of the conversion indication information according to the conversion of the operating network can be understood that after the conversion of the operating network is detected, based on the event that is about to occur or has occurred, the information used to indicate that an operating network conversion event occurs on the terminal, that is, the conversion indication information, is generated. Of course, the conversion indication information may also include other information content and so on.

202, sending the conversion indication information to a base station.

Specifically, it can be understood that after the conversion indication information is generated, the conversion indication information is sent to a base station. The purpose of sending may be to facilitate the base station to obtain the conversion indication message in time. Besides, a communication state of the terminal can be adjusted based on the conversion indication message. For example, the base station determines that the terminal will perform or has performed an operating network conversion operation through the conversion indication message, and then further, the base station decides a communication state of the terminal based on an operating network conversion duration or a service performed by the terminal after the conversion, etc. The sending the conversion indication information to the base station may also means allowing the base station to obtain information about the terminal, such as information for the operating network conversion, UE capability information of the terminal, state information of the terminal, etc.

It can be seen that in the embodiment of the present application, after a conversion of an operating network is detected, a multi-SIM terminal generates conversion indication information according to the conversion of the operating network, and sends the conversion indication information to a base station, so that the base station can timely obtain an operating network conversion event that is occurring or is about to occur on the terminal in time. Further, a communication state of the terminal is adjusted through the conversion indication information. In this way, the accuracy of the judgment from the base station for the current status of the multi-SIM terminal is increased and, in further, it is convenient for the base station to better configure and use network resources, and reduce the waste of network resources caused by the conversion of the operating network of the multi-SIM terminal.

In a possible example, the conversion indication information includes any one or more of the following: an operating network conversion indication, an operating network conversion reason, an operating network conversion duration, a priority of a conversion service, a type for triggering a conversion service, a connection maintaining request indication, and network information on another operating network to be converted.

Specifically, it can be understood that the operating network conversion indication can be expressed in the form of implicit indication, encryption, code name, code, etc.; or the operating network conversion indication can be expressed directly through message name, text, symbol, voice, picture, etc. However, whether directly or indirectly, it can be recognized by the base station to conclude that the terminal is about to be, has been or is in the process of the conversion of the operating network. The operating network conversion reason may include: the terminal performing conventional multi-SIM operations (for example, periodically switching between two operating networks); the terminal receiving Paging information from another network and converting the operating network; the terminal initiating a mobility update process in another network; the terminal initiating, in another network, a voice over long-term evolution (VOLTE) service, a voice over new radio (VoNR) service, a video telephony and other high-priority service; a type for triggering a conversion service, such as a specific type or a non-specific type; the terminal initiating a data service in another network; and the terminal ending the DRX sleep period in another network, etc. The operating network conversion duration is the time that a converted service will last from initiation to completion upon a conversion from the operating network to another network. The time may be an accurate time value, such as the time accurate to ms; or the time may be a time period range, or the time may be an indication of a relative length of time, for example, an expected duration is long/medium/short, etc. The specific time period can be divided according to different standards. The priority of a conversion service can be understood as if the conversion of the operating network is triggered due to signaling/a data service of another network, the message may further include priority information for triggering the service, for example, the signaling (call, etc.) is a high-priority service, and the data service (ordinary data transmission, etc.) is a low-priority service. In addition, the connection maintaining request indication can be understood as if the terminal is currently in a radio resource control (RRC)-connected state and the terminal hopes that the base station remains the connected state temporarily, the connection maintaining request indication and the network information on another operating network to be converted may be directly included in the conversion indication information. The connection maintaining request indication may be expressed in the form of implicit indication, encryption, code name, code, etc.; or the connection maintaining request indication may be expressed directly through message name, text, symbol, voice, picture, etc. However, whether directly or indirectly, it can be recognized by the base station to conclude that the terminal hopes that the base station remains the connected state temporarily.

In addition, the conversion indication information may also include a radio access type (RAT), an operator name, and a public land mobile network (PLMN) of an operator, etc., for another operating network to be converted.

It can be seen that the specific situation of the conversion of the operating network of the terminal can be more accurately and comprehensively reflected through any one or more of the information included in the conversion indication information.

In a possible example, UE capability reporting information is sent to the base station.

Specifically, it can be understood that the terminal can initiatively send the capability reporting information to the base station, or send as a response to a capability reporting request message of the base station.

It can be seen that the terminal sends the UE capability reporting information of the terminal to the base station, which is convenient for indicating the UE capability information to the base station.

In a possible example, the UE capability reporting information includes any one or more of the following: a number of identification cards in the terminal, radio frequency information of the terminal, and an information list of the operating network.

Specifically, the number of identification cards in the terminal is, for example, dual, or ternary. The radio frequency information of the terminal is, for example, any one of single-transmitting single-receiving, single-transmitting multiple-receiving, and multiple-transmitting single-receiving, that is, multiple subscriber identification module cards share a radio frequency system. The information list of the operating network may be a combination of one or more of the network RAT type, operator name, and operator PLMN included in the operating network corresponding to each identification card included in the terminal. The operating networks corresponding to different identification cards can be the same or different.

It can be seen that the UE capability reporting information of the terminal being sent by the terminal to the base station contains various content, which is convenient to indicate that the terminal is a multi-SIM multi-standby terminal, and the specific association information of the operating networks corresponding to the multiple identification cards of the terminal.

In a possible example, after the conversion of the operating network is detected, the method further includes: obtaining a conversion duration of the operating network; the generating the conversion indication information according to the conversion of the operating network includes: if the conversion duration of the operating network is greater than or equal to a first time threshold, the conversion indication information is generated according to the conversion of the operating network; and/or if the conversion duration of the operating network is less than the first time threshold, not generating the conversion indication information.

Specifically, it can be understood that after the conversion of the operating network is obtained, the conversion duration of the operating network can also be obtained, and when the conversion duration of the operating network is greater than or equal to the first time threshold, the conversion indication information is generated according to the conversion of the operating network. Otherwise, the conversion indication information is not generated. The first time threshold can be preset or generated immediately, and the specific setting standard can be set according to the conversion service and the priority of the service. The specific setting standard can be set according to historical statistical data, or can be set after estimation.

It can be seen that after the conversion of the operating network is obtained, the conversion duration of the operating network is obtained; and when the conversion duration of the operating network is greater than or equal to the first time threshold, the conversion indication information is generated. It can avoid a waste of resources of the terminal, etc., due to the generation of the conversion indication information when the conversion duration is too short.

In a possible example, after the conversion of the operating network is detected, the method further includes: obtaining a priority of a conversion service, where the conversion service is a service performed after the terminal converts an operating network. The generating the conversion indication information according to the conversion of the operating network includes: if the priority of the conversion service is greater than a priority of a current service, generating the conversion indication information according to the conversion of the operating network; and/or if the priority of the conversion service is less than or equal to a priority of a current service, not generating the conversion indication information.

Specifically, it can be understood that after the conversion of the operating network is obtained, the priority of the conversion service can also be obtained, and when the priority of the conversion service is greater than a priority of a current service, the conversion indication information is generated according to the conversion of the operating network. Moreover, the conversion service can be understood as a service that triggers the conversion, so the service can be either an already ongoing service or an upcoming service. Corresponding to the conversion service, the current service refers to the ongoing service of the operating network before the conversion. For example, if the first network is an operating network, the service executed by the first network is the current service. After the operating network is converted from the first network to the second network, the service performed by the second network after the conversion is the conversion service. It can be understood that the priority of the conversion service is preset, for example, the signaling (call, etc.) is a high-priority service, and the data service (ordinary data transmission, etc.) is a low-priority service. For example, if the priority of the conversion service is much lower than the priority of the current service, it is possible to perform the conversion of the operating network after a determination that the current service is completed.

It can be seen that after the conversion of the operating network is obtained, the priority of the conversion service is obtained; and when the priority of the conversion service is higher than the priority of the current service, the conversion indication information is then generated. It can avoid the loss of current service data due to the conversion of the operating network when the priority of the conversion service is lower than that of the current service.

In a possible example, after the conversion of the operating network is detected, the method further includes:

obtaining type information of a conversion service, the conversion service is a service performed after the terminal converts the operating network; the generating the conversion indication information according to the conversion of the operating network includes: if the type of the conversion service is a specific service type, generating the conversion indication information according to the conversion of the operating network; and/or if the type of the conversion service is a non-specific service type, not generating the conversion indication information.

Specifically, it can be understood that after the conversion of the operating network is obtained, the type information of the conversion service can also be obtained. For example, the conversion service is pre-classified according to certain standards, and is divided into several categories. Moreover, the specific service type is preset. For a service belonging to the specific service type, the conversion indication information is generated according to the conversion of the operating network. For example, the type of the conversion service is a voice message, and if the voice message belongs to the specific service type, the conversion indication information is generated. Otherwise, if the voice message does not belong to the specific service type, the conversion indication information is not generated. That is, when a specific service type is defined in advance, certain conversion services can be preset as the specific service type; similarly, other services other than the certain conversion services can also be preset as the specific service type.

Further, if the type of the conversion service is a specific service type, the conversion indication information is generated according to the conversion of the operating network; and, if the type of the conversion service is a non-specific service type, the conversion indication information is not generated. It can be understood that the types of the two conversion services between the former and the latter are not a same service type. For example, the former is an incoming video call which belongs to a specific service type, and the conversion indication information is generated. Moreover, the latter is a short message which does not belong to a specific service type, and the conversion indication information is not generated.

It can be seen that after the conversion of the operating network is obtained, the type of the conversion service is obtained; and when the type of the conversion service is the specific service type, the conversion indication information is generated. It can avoid a waste of resources due to the generation of the conversion indication information when the type of the conversion service does not meet the specific service type.

In a possible example, the type information of the conversion service comes from a configuration by the base station.

Specifically, it can be understood that the type information of the conversion service is pre-configured by the base station, and may be stored in the terminal in the form of a list, or may also be stored in the base station. Moreover, when the base station configures the type information of the conversion service, if it is based on "if the type of the conversion service is a specific service type, the conversion indication information is generated according to the conversion of the operating network", the specific service type can be defined as a type that includes a minority of conversion services, while a non-specific service type is a type that includes a majority of conversion services.

It can be seen that the type information of the conversion service obtained by the terminal is configured by the base station in advance, so that the terminal can obtain the type information of the conversion service in time when the conversion of the operating network is detected. Moreover, the specific service type is a type that includes a minority of conversion services, which can reduce the frequency at which the terminal generates the conversion indication information according to the conversion of the operating network, thereby reducing the signaling burden of the terminal.

In a possible example, after the conversion of the operating network is detected, the method further includes: obtaining an operating network conversion reason; the generating the conversion indication information according to the conversion of the operating network includes: if the operating network conversion reason is a specific reason type, generating the conversion indication information according to the conversion of the operating network; and/or if the operating network conversion reason is a non-specific reason type, not generating the conversion indication information.

Specifically, it can be understood that there may be many reasons for triggering the conversion of the operating network, such as triggering caused by multiple types of services initiated or received by the terminal in another network. In addition to the triggering caused by the services, the triggering may also originate from the terminal performing conventional multi-SIM operations, for example, the terminal periodically switching between two or more operating networks. If the periodic network conversion of the terminal is set to a specific reason type, the conversion indication information is generated according to the periodic network conversion. Otherwise, other conversion reasons can also be set to a specific reason type. The specific reason type can be established according to different standards, which is not limited here.

It can be seen that after the conversion of the operating network is obtained, the operating network conversion reason is obtained; and when the operating network conversion reason is a specific reason type, the conversion indication information is generated. It can avoid a waste of resources due to the generation of the conversion indication information when the operating network conversion reason does not meet the specific reason type.

In a possible example, the type information of the operating network conversion reason comes from a configuration by the base station.

Specifically, it can be understood that the type information of the operating network conversion reason is pre-configured by the base station, and may be stored in the terminal in the form of a list, or may also be stored in the base station. Moreover, when the base station configures the type information of the operating network conversion reason, if it is based on "if the operating network conversion reason is a specific reason type, the conversion indication information is generated according to the conversion of the operating network", the specific reason type can be defined as a type that includes a minority of operating network conversion reasons, while a non-specific reason type is a type that includes a majority of operating network conversion reasons.

It can be seen that the type information of the operating network conversion reason obtained by the terminal is configured by the base station in advance, so that the terminal can obtain the type information of the operating network conversion reason in time when the conversion of the operating network is detected. Moreover, if the specific reason type is a type that includes a minority of operating network conversion reasons, which can reduce the frequency at which the terminal generates the conversion indication information according to the conversion of the operating network, thereby reducing the signaling burden of the terminal.

In a possible example, after the conversion of the operating network is detected, the method further includes: obtaining a time interval between the conversion of the operating network and a previous conversion; the generating the conversion indication information according to the conversion of the operating network includes: if the time interval is greater than or equal to a second time threshold, generating the conversion indication information according to the conversion of the operating network; and/or if the time interval is less than the second time threshold, not generating the conversion indication information.

Specifically, it can be understood that after the conversion instruction of the operating card is detected, the time interval between the conversion of the operating network and a previous conversion instruction is obtained, in the case that the time interval is greater than or equal to the second time threshold, the conversion indication information is generated according to the conversion of the operating network. That is, when the time interval between the two conversion instructions is greater than the second time threshold, the conversion indication information is generated according to the conversion of the operating network. The second time threshold can be preset or generated immediately, and the specific setting standard can be set according to the conversion service and the priority of the service, and can be set based on historical statistical data, or it can be set after estimation.

Further, the time interval may be calculated in a manner of: after the conversion instruction was obtained at a previous time, starting a first timer; and after the first timer temporally reaches the second time threshold, resetting the time of the first timer to an initial state, and stopping the timing; if the conversion of the operating network is detected, obtaining a state of the first timer; if the first timer is in a timing stopping state which indicates that the time interval is greater than or equal to the second time threshold, generating the conversion indication information according to the conversion of the operating network, and sending the conversion indication information to the base station. Alternatively, if the first timer is in a running state, converting the operating card again from the first identification card to the second identification card; or recording the time when the conversion instruction was acquired at a previous time, which is T1, and recording the time when the current conversion instruction is detected, which is T2. If T2-T1 is greater than the second time threshold, it indicates that the time interval is greater than or equal to the second time threshold. Then, generating the conversion indication information according to the conversion of the operating network, and sending the conversion indication information to the base station. Alternatively, if the T2-T1 is less than the second time threshold, not generating the conversion indication information.

It can be seen that an increase in the burden of new radio signaling is avoided when the conversion is too frequent, provided that the time interval between two conversion instructions is obtained.

In a possible example, after the conversion of the operating network is detected, the method further includes: starting a timer, and pre-setting that, after a timing of the timer changes T0, resetting a time of the timer to an initial state and stopping the timing; if the conversion of the operating network is obtained again, obtaining a state of the timer; if the timer is in a timing stopping state, the conversion indication information is generated according to the conversion of the operating network, and sending the conversion indication information to the base station; and/or if the timer is in a running state, not sending the conversion indication information.

Specifically, it can be understood that after the conversion of the operating network is detected, a timer Tswitch-prohibit is started. During timing of this timer, even if the conversion of the operating network occurs, not sending an indication. Moreover, after the timer expires, it will be automatically reset. For example, taking the initial state of the timer being 0 as an example, the upper limit of the timing is T0, that is, after the timing reaches T0, the timer is reset to 0. If the obtained state of the timer is 0 when the conversion of the operating network is obtained again, it means that the timing has exceeded T0, and then the conversion indication information is generated according to the conversion of the operating network, and sending the conversion indication information to the base station. Otherwise, not generating the conversion indication information. Of course, the initial state of the timer can also be other time, and after a temporal increase or decrease of T0, resetting the timer to other time in the initial state.

It can be seen that a time interval between two conversion instructions is obtained by a timer, and when the time interval is greater than a preset time interval, the conversion indication information is generated according to the conversion of the operating network, thereby avoiding an increase in the burden of new radio signaling when the conversion is too frequent.

In a possible example, the conversion indication information is sent in any one or more of the following forms: dedicated RRC signaling, physical layer signaling, a MAC CE message, a PDCP Control PDU.

Specifically, it can be understood that the conversion indication information is sent to the base station, the message can be sent in a form of dedicated RRC signaling, physical layer signaling, a MAC control element (MAC CE) message, and a packet data convergence protocol (PDCP) control protocol data unit (PDU). Taking the form of MAC CE as an example, different bits of information are sent to indicate different contents of the conversion indication information of the operating network, as shown in FIG. 2B: 1bit S represents an operating network conversion indication to be performed, and 2bit C represents conversion reason indexes which may correspond to an index table, where different conversion reasons correspond to different identifiers; 5bit T represents an expected duration, etc. Among them, S, C, and T are contents of specific information that is sent.

It can be seen that when the conversion indication information is sent to the base station, the information can be sent in various forms, which makes the sending of the information more convenient and improves the sending efficiency.

Consistent with the foregoing embodiment, please refer to this embodiment, and another information indication method provided by the embodiment of the present application includes:

receiving conversion indication information, where the conversion indication information is sent by a terminal and is used to indicate that an operating network conversion event occurs on the terminal.

Specifically, it can be understood that the base station receives the conversion indication message, and the conversion indication message is used to indicate that an operating network conversion event occurs on the terminal, Of course, the conversion indication information may also include other information associated with the operating network conversion event.

It can be seen that the base station receives the conversion indication information from the terminal, and can adjust the communication state of the terminal according to the conversion indication information, so as to realize the reasonable configuration of communication resources and reduce a waste of resources. It can also be convenient for the base station to obtain the current state of the terminal, so that the base station performs other management measures.

In a possible example, after the receiving the conversion indication information, the method further includes: adjusting a communication state of the terminal according to the conversion indication information.

Specifically, it can be understood that the base station will adjust a communication state of the terminal according to the conversion indication message after the conversion indication information is received. The communication state of the terminal is a communication connected relationship between the terminal and the base station, such as maintaining an RRC connection, disconnecting an RRC connection, or adjusting the terminal to an inactive state, etc. The communication state of the terminal can also be a channel resource allocated by the base station to the terminal, such as allocating channel resources for the terminal, reserving channel resources for the terminal, or releasing channel resources for the terminal, etc.

It can be seen that, after receiving the conversion indication information from the terminal, the base station adjusts the communication state of the terminal according to the conversion indication information. The communication resource is reasonably configured, and a waste of resources is reduced.

In a possible example, after the adjusting the communication state of the terminal according to the conversion indication information, the method further includes: sending operating network conversion confirmation information to the terminal.

Specifically, it can be understood that, after the base station adjusts the communication state of the terminal according to the conversion indication information, the base station also sends, to the terminal, operating network conversion confirmation information, which informs the terminal of a confirmation that the terminal may or may not perform the operating network conversion, and of some related information.

It can be seen that after the base station adjusts the communication state of the terminal according to the conversion indication information, the base station also sends the operating network conversion confirmation information to the terminal. It is convenient for the terminal to confirm that the base station has received and confirmed the operating network conversion information, and it is also convenient for the terminal to make corresponding operations.

In a possible example, the conversion indication information includes any one or more of the following: an operating network conversion indication, an operating network conversion reason, an operating network conversion duration, a priority of a conversion service, a type for triggering a conversion service, a connection maintaining request indication, and network information on another operating network to be converted.

Specifically, it can be understood that the operating network conversion indication can be expressed in the form of implicit indication, encryption, code name, code, etc., or can be expressed directly through message name, text, symbol, voice, picture, etc. However, whether directly or indirectly, it can be recognized by the base station to conclude that the terminal is about to be, has been or is in the process of the conversion of the operating network. The operating network conversion reason may include: the terminal performing conventional multi-SIM operations (for example, periodically switching between two operating networks); the terminal receiving Paging information from another network and converting the operating network; the terminal initiating a mobility update process in another network; the terminal initiating, in another network, a voice over long-term evolution (VOLTE) service, a voice over new radio (VoNR) service, a video telephony and other high-priority service; the terminal initiating a data service in another network; and the terminal ending the DRX sleep period in another network, etc. The operating network conversion duration is the time that a converted service will last from initiation to completion upon a conversion from the operating network to another network. The time may be an accurate time value, such as the time accurate to ms; or the time may be based on the estimated time of the UE; or the time may be a time period range, or the time may be an indication of a relative length of time, for example, an expected duration is long/medium/short, etc. The specific time period can be divided according to different standards. The priority of a conversion service can be understood as if the conversion of the operating network is triggered due to signaling/a data service of another network, the message may further include priority information for triggering the service, for example, the signaling (call, etc.) is a high-priority service, and the data service (ordinary data transmission, etc.) is a low-priority service. In addition, the connection maintaining request indication can be understood as if the terminal is currently in the radio resource control (RRC)-connected state and the terminal hopes that the base station remains the connected state temporarily, the connection maintaining request indication and the network information on another operating network to be converted may be directly included in the conversion indication information. The connection maintaining request indication may be expressed in the form of implicit indication, encryption, code name, code, etc.; or the connection maintaining request indication may be expressed directly through message name, text, symbol, voice, picture, etc. However, whether directly or indirectly, it can be recognized by the base station to conclude that the terminal hopes that the base station remains the connected state temporarily.

In addition, the conversion indication information may also include a radio access type (RAT), an operator name, and a public land mobile network (PLMN) of an operator, etc., for another operating network to be converted.

It can be seen that the base station can more accurately and comprehensively obtain the specific situation of the conversion of the operating network of the terminal based on the conversion indication information through any one or more of the information included in the conversion indication information.

In a possible example, receiving UE capability reporting information from the terminal.

Specifically, it can be understood that the UE capability reporting information received by the base stations from the terminal can either be sent by the terminal to the base station initiatively, or function as a response to a capability reporting request message of the base station.

It can be seen that the base station receives the UE capability reporting information from the terminal, so that the base station can determine the terminal capability according to the UE capability reporting information, so as to more accurately determine the hardware status of the terminal.

Specifically, the number of identification cards in the terminal is, for example, dual, or ternary. The radio frequency system structure of the terminal is, for example, any one of single-transmitting single-receiving, single-transmitting multiple-receiving, and multiple-transmitting single-receiving, that is, multiple subscriber identification module cards share a radio frequency system. The information list of the operating network may be a combination of one or more of the network RAT type, operator name, and operator PLMN included in the operating network corresponding to each identification card included in the terminal. The operating networks corresponding to different identification cards can be the same or different.

It can be seen that the base station receives the UE capability reporting information from the terminal, and determines that the terminal is a multi-SIM multi-standby terminal and the specific association information of the operating networks corresponding to the multiple identification cards of the terminal, so that the base station can more accurately determine the state of the terminal (for example, a periodic short-term operating network conversion occurs instead of the terminal being in an abnormal state) when the terminal is about to convert to the operating network, and can maintain a communication connection with the terminal, reserve channel resources for the terminal, and avoid subsequent re-access delays and signaling burdens.

In a possible example, the UE capability reporting information includes any one or more of the following: a number of identification cards in the terminal, radio frequency information of the terminal, and an information list of the operating network.

Specifically, it can be understood that the terminal can initiatively send the UE capability reporting information to the base station, or can also send as a response to a capability reporting request message of the base station.

It can be seen that the terminal sends the UE capability reporting information of the terminal to the base station, which is convenient for indicating the UE capability information to the base station.

In a possible example, the adjusting the communication state of the terminal includes at least one of the following: adjusting the communication state of the terminal to a first state, where the first state is a communication connection maintaining state; adjusting the communication state of the terminal to a second state, where the second state is an inactive state; and adjusting the communication state of the terminal to a third state, where the third state is a connection release state.

Specifically, it can be understood that adjusting the communication state of the terminal can be understood as if the base station decides to maintain the RRC connection for the terminal, then adjusting the communication state of the terminal to the first state, and further, a corresponding notification message may also be sent to the terminal. The notification message can be sent in a form of dedicated RRC signaling, physical layer signaling, a MAC control element (MAC CE) message, a packet data convergence protocol (PDCP), and a control protocol data unit (PDU), etc. If the base station decides to transfer the terminal to the inactive/deactived (RRC_Inactive) state, that is, the second state, the base station can send a corresponding RRC Release message with SuspendConfig configuration to the terminal to indicate that the terminal enters the inactive state; and if the base station decides to release the RRC connection of the terminal, that is, adjust the communication state of the terminal to the third state, the base station can also send an RRC Release message to the terminal to release the RRC connection.

It can be seen that adjusting the terminal to a different communication state by the base station can effectively improve resource allocation efficiency and resource utilization. The waste of channel resources and the increase in signaling burden are avoided, and the signaling delay can also be reduced when the terminal needs to maintain a communication connection.

In a possible example, if the conversion indication information includes a conversion duration, the adjusting the communication state of the terminal according to the conversion indication information includes: if the conversion duration is less than the first time threshold, adjusting the communication state of the terminal to a first state, where the first state is a state in which the terminal maintains a communication connection; or, if the conversion duration is less than the second time threshold and greater than the first time threshold, adjusting the communication state of the terminal to a second state, where the second state is an inactive state; or, if the conversion duration is greater than the second time threshold, adjusting the communication state of the terminal to a third state, where the third state is a connection release state.

Specifically, it can be understood that he first time threshold and the second time threshold are preset by the base station, and may be the same as or different from the values of the first time threshold and the second time threshold in the foregoing method examples. The second time threshold is greater than the first time threshold. For example, the second time threshold is 5 ms, and the first time threshold is 3 ms, 4 ms, or 1 ms.

It can be seen that determining the communication state of the terminal according to different conversion durations can effectively improve resource allocation efficiency and resource utilization.

In a possible example, the conversion indication information includes an operating network conversion duration, after the adjusting the communication state of the terminal to the third state, the method further includes: generating connection indication information according to the conversion duration, where the connection indication information is used to indicate a communication connection re-establishment with the operating network by the terminal after an arrival to the conversion duration.

Specifically, it can be understood that the conversion indication information includes operating network conversion duration, and after the communication state of the terminal is adjusted to the third state, that is, after the RRC connection with the terminal is released, generating connection indication information according to the operating network conversion duration, for example, the conversion duration is 1s (second), 5m (minute), or 0.3h (hour), and then the base station generates and sends the connection indication information to the terminal, which is used to indicate a communication connection re-establishment with the operating network by the terminal after an arrival to the operating network conversion duration. Further, after 1s, 5m, or 0.3h, the base station in turn re-establishes the communication connection relationship with the terminal.

It can be seen that after the base station releases the communication connection with the terminal, it will generate connection indication information according to the duration of the conversion service of the terminal, which facilitates the terminal to obtain the connection recovery time, and can also effectively reduce problems such as increase in network signaling delay.

In a possible example, the conversion indication information includes a connection maintaining request indication, the adjusting the communication state of the terminal according to the conversion indication information includes: maintaining a communication connected state with the terminal according to the connection maintaining request indication.

Specifically, it can be understood that if the conversion indication information includes a connection maintaining request indication, the base station directly maintains a communication connected state for the terminal after it effectively recognizes the connection maintaining request indication to obtain the conversion indication information.

It can be seen that the base station maintains the communication connected state with the terminal after it recognizes the connection maintaining request indication, which can reduce the problem such as an increase in network signaling delay due to a request for re-connection, a wait for allocation of a channel resource by the base station, etc., after the terminal disconnects from the base station.

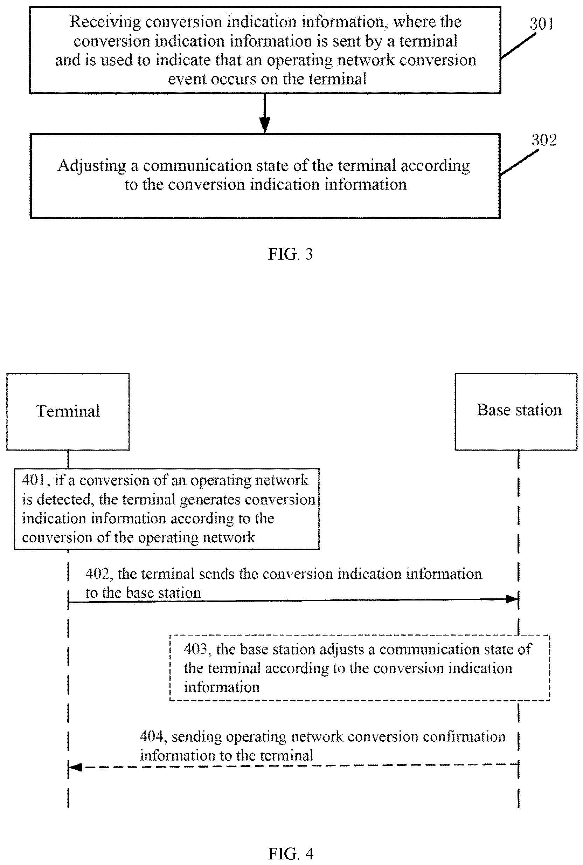

Consistent with the embodiment shown in FIG. 2 above, please refer to FIG. 3. FIG. 3 is a schematic flow diagram of another information indication method provided by an embodiment of the present application, and the method includes:
301, receiving conversion indication information, where the conversion indication information is sent by a terminal and is used to indicate that an operating network conversion event occurs on the terminal; and
Specifically, it can be understood that the base station receives the conversion indication message, and the conversion indication message is used to indicate that the operating network conversion event occurs on the terminal. Of course, the conversion indication information may also include other information associated with the operating network conversion event, etc.

302, adjusting a communication state of the terminal according to the conversion indication information.

Specifically, it can be understood that, after receiving the conversion indication information, the base station may also adjust the communication state of the terminal based on the conversion indication message. The communication state of the terminal is a communication connection relationship between the terminal and the base station, such as maintaining the RRC connection, disconnecting the RRC connection, or adjusting the terminal to an inactive state. The communication state of the terminal can also be a channel resource allocated by the base station to the terminal, such as allocating a channel resource for the terminal, reserving a channel resource for the terminal, or releasing a channel resource for the terminal, etc.

It can be seen that, after receiving the conversion indication information from the terminal, the base station adjusts the communication state of the terminal according to the conversion indication information. The communication resources are reasonably configured and a waste of resources is reduced.

Consistent with the embodiments shown in FIG. 2 and FIG. 3, please refer to FIG. 4. FIG. 4 is an interactive schematic diagram of an information indication method provided by an embodiment of the present application.

401, if a conversion of an operating network is detected, a terminal generates conversion indication information according to the conversion of the operating network. The conversion indication information is used to indicate that an operating network conversion event occurs on the terminal.

402, the terminal sends the conversion indication information to a base station, so that the base station adjusts a communication state of the terminal according to the conversion indication information.

For steps 401-402, please refer to the above steps 201-202, which will not be repeated here.

403, the base station adjusts the communication state of the terminal according to the conversion indication information.

Optionally, after step 402, step 403 may be performed. For step 403, please refer to the above steps 301-302, which will not be repeated here.

404, the base station sends operating network conversion confirmation information to the terminal.

Optionally, step 404 can be performed after step 403. That is, the base station generates operating network conversion confirmation information before or after adjusting the communication state of the terminal, and can also send the operating network conversion confirmation information to the terminal. The operating network conversion confirmation information is to notify the terminal of a confirmation that the terminal can perform the conversion of the operating network, and the terminal's communication state which is adjusted by the base station for the terminal, and the information associated with the communication state. For the communication state of the terminal after adjustment, see the foregoing content, which will not be repeated here.

It can be seen that, after the conversion of the operating network is detected, the terminal generates the conversion indication information according to the conversion instruction and sends the conversion indication information to the base station, so that the base station can adjust the communication state of the terminal according to the conversion indication information. The efficiency and effectiveness of resource allocation and the resource utilization are improved.

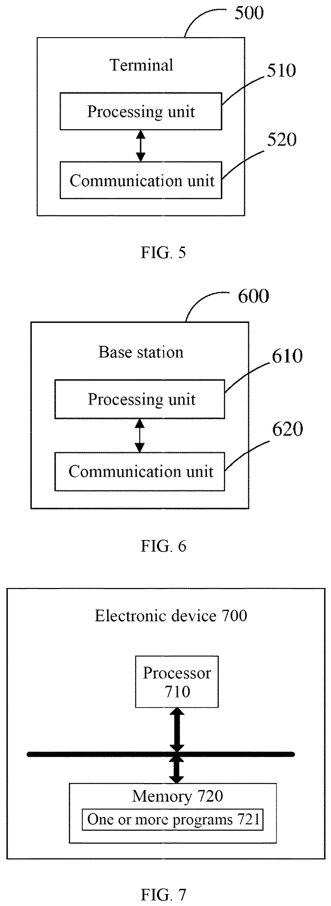

Please refer to FIG. 5, which is a schematic diagram of a functional unit of a terminal 500 provided by an embodiment of the present application. The terminal 500 includes: a processing unit 510 and a communication unit 520.

The processing unit 510 is configured to: if a conversion instruction of an operating card is detected, generate conversion indication information according to the conversion of the operating network, where the conversion indication information is used to indicate that an operating network conversion event occurs on the terminal.

The communication unit 520 is configured to send the conversion indication information to the base station.

It can be seen that in the embodiment of the present application, after a conversion of an operating network is detected, a multi-SIM terminal generates conversion indication information according to the conversion of the operating network, and sends the conversion indication information to a base station, so that the base station can timely obtain an operating network conversion event that is occurring or is about to occur on the terminal, and further adjust a communication state of the terminal through the conversion indication information. In this way, the accuracy of the judgment from the base station for the current status of the multi-SIM terminal is increased and, in further, it is convenient for the base station to better configure and use network resources, and reduce the waste of network resources caused by the conversion of the operating network of the multi-SIM terminal.

In a possible example, the conversion indication information includes any one or more of the following: an operating network conversion indication, an operating network conversion reason, an operating network conversion duration, a priority of a conversion service, a type for triggering a conversion service, a connection maintaining request indication, and network information on another operating network to be converted.

In a possible example, the communication unit 520 is further configured to send UE capability reporting information to the base station.

In a possible example, the UE capability reporting information includes any one or more of the following: a number of identification cards in the terminal, radio frequency information of the terminal, and an information list of the operating network.

In a possible example, the processing unit 510 is further configured to obtain a conversion duration of the operating network after the conversion of the operating network is detected. In the aspect of the generating the conversion indication information according to the conversion of the operating network, the processing unit 510 is specifically configured to, if the conversion duration of the operating network is greater than or equal to a first time threshold, generate the conversion indication information according to the conversion of the operating network; and/or, if the conversion duration of the operating network is less than the first time threshold, not generate the conversion indication information.

In a possible example, the processing unit 510 is further configured to obtain a priority of a conversion service after the conversion of the operating network is detected, the conversion service is a service performed after the terminal converts an operating network. In the aspect of the generating the conversion indication information according to the conversion of the operating network, the processing unit 510 is specifically configured to, if the priority of the conversion service is greater than a priority of a current service, generate the conversion indication information according to the conversion of the operating network; and/or if the priority of the conversion service is less than or equal to a priority of a current service, not generate the conversion indication information.

In a possible example, the processing unit 510 is further configured to obtain type information of a conversion service after the conversion of the operating network is detected, the conversion service is a service performed after the terminal converts an operating network. In the generating the conversion indication information according to the conversion of the operating network, the processing unit 510 is configured to, if the type of the conversion service is a specific service type, generate the conversion indication information according to the conversion of the operating network; and/or if the type of the conversion service is a non-specific service type, not generate the conversion indication information.

In a possible example, the type information of the conversion service comes from a configuration by the base station.

In a possible example, the processing unit 510 is further configured to obtain an operating network conversion reason after the conversion of the operating network is detected, and the processing unit 510 is specifically configured to: if the operating network conversion reason is a specific reason type, generate the conversion indication information according to the conversion of the operating network; and/or if the operating network conversion reason is a non-specific reason type, not generate the conversion indication information.

In a possible example, type information of the operating network conversion reason comes from a configuration by the base station.

In a possible example, the processing unit 510 is further configured to obtain a time interval between the conversion of the operating network and a previous conversion after the conversion of the operating network is detected, and in the aspect of the generating the conversion indication information according to the conversion of the operating network, the processing unit 510 is specifically configured to, if the time interval is greater than or equal to a second time threshold, generate the conversion indication information according to the conversion of the operating network; and/or if the time interval is less than the second time threshold, not generate the conversion indication information.

In a possible example, the processing unit 510 is further configured to start a timer after the conversion of the operating network is detected, pre-set that, after a timing of the timer changes T0, the timer is temporally reset to an initial state and stop the timing; if the conversion of the operating network is obtained again, obtain a state of the timer; if the timer is in a timing stopping state, generate the conversion indication information according to the conversion of the operating network, and send the conversion indication information to the base station; and/or if the timer is in a running state, not send the conversion indication information.

In a possible example, the conversion indication information is sent in any one or more of the following forms: dedicated RRC signaling, physical layer signaling, a MAC CE message, a PDCP Control PDU.

Please refer to FIG. 6, which is a schematic diagram of a functional unit of a base station 600 provided by an embodiment of the present application. The base station 600 includes: a processing unit 610 and a communication unit 620.

The communication unit 620 is configured to receive conversion indication information, and the conversion indication information is sent by a terminal and is used to indicate that an operating network conversion event occurs on the terminal.

It can be seen that, after receiving the conversion indication information from the terminal, the base station adjusts the communication state of the terminal according to the conversion indication information. The communication resource is reasonably allocated, and a waste of resources is reduced.

In a possible example, the processing unit 610 is configured to adjust a communication state of the terminal according to the conversion indication information after the conversion indication information is received.

In a possible example, the processing unit 610 is further configured to, after adjusting the communication state of the terminal according to the conversion indication information, send operating network conversion confirmation information to the terminal. In a possible example, the conversion indication information includes any one or more of the following: an operating network conversion indication, an operating network conversion reason, an operating network conversion duration, a priority of a conversion service, a type for triggering a conversion service, a connection maintaining request indication, and network information on another operating network to be converted.

In a possible example, the communication unit 620 is further configured to receive UE capability reporting information from the terminal.

In a possible example, the UE capability reporting information includes any one or more of the following: a number of identification cards in the terminal, radio frequency information of the terminal, and an information list of the operating network.

In a possible example, in the aspect of adjusting the communication state of the terminal, the processing unit 610 is specifically configured to perform at least one of the following: adjusting the communication state of the terminal to a first state, where the first state is a communication connection maintaining state; adjusting the communication state of the terminal to a second state, where the second state is an inactive state; and adjusting the communication state of the terminal to a third state, where the third state is a connection release state.

In a possible example, the conversion indication information includes a conversion duration, the processing unit 610 is further configured to, after adjusting the communication state of the terminal to the third state, generate connection indication information according to the operating network conversion duration, where the connection indication information is used to indicate a communication connection re-establishment with the operating network by the terminal after an arrival to the conversion duration.

In a possible example, the conversion indication information includes a connection maintaining request indication, in the aspect of adjusting the communication state of the terminal according to the conversion indication information, the processing unit 610 is specifically configured to maintain a communication connected state with the terminal according to the connection maintaining request indication.

FIG. 7 is a schematic structural diagram of an electronic device 700 provided by an embodiment of the present application. As shown in the figure, the electronic device 700 includes a processor 710, a memory 720, and one or more programs 721, where the one or more programs 721 are stored in the foregoing memory 720 and are configured to be executed by the foregoing processor 710, and the one or more programs 721 include instructions for executing any step in the foregoing method embodiments.

It can be understood that the electronic device 700 may be the aforementioned terminal, and the one or more programs 721 include instructions for executing any step in the foregoing method embodiments on the terminal side. The electronic device 700 may also be the aforementioned base station, and the one or more programs 721 include instructions for executing any step in the foregoing method embodiment on the base station side.

The processor 710 may also include a main processor and a co-processor. The main processor is a processor which is used to process data in an awaken state, and is also called a CPU (Central Processing Unit). The co-processor is a low-power processor which is used to process data in a standby state. In some embodiments, the processor may be integrated with a GPU (Graphics Processing Unit, image processor), and the GPU is used to render and draw content that needs to be displayed on the display screen. In some embodiments, the processor 710 may also include an AI (Artificial Intelligence) processor, which is used to process computing operations related to machine learning.

The memory 720 may include one or more computer-readable storage media which may be non-transitory. The memory 720 may also include a high-speed random access memory and a non-volatile memory, such as one or more magnetic disk storage devices and flash memory devices. In this embodiment, the memory 720 is used to store at least the following computer program, where the computer program is loaded and executed by the processor 710 to implement a relevant step in a method for managing multi-body hardware disclosed in any of the foregoing embodiments. In addition, the resources stored in the memory 720 may also include an operating system and data, etc., and the storage mode may be short-term storage or permanent storage. The operating system may include Windows, Unix, Linux, etc. The data may include, but is not limited to, terminal interaction data, terminal device signals, and so on.

In some embodiments, the electronic device 700 may further include an input/output interface, a communication interface, a power supply, and a communication bus.

Those skilled in the art can understand that the structure disclosed in this embodiment does not constitute a limitation on the electronic device, and may include more or fewer components.

The foregoing mainly introduces the solution of the embodiment of the present application from the perspective of the execution process on the method side. It can be understood that, in order to implement the above-mentioned functions, an electronic device includes hardware structures and/or software modules corresponding to implementations of various functions. Those skilled in the art should easily realize that in combination with the units and steps of the examples described in the embodiments provided herein, the present application can be implemented in the form of hardware or a combination of hardware and computer software. Whether a certain function is executed by hardware or computer software-driven hardware depends on the specific application and design constraint conditions of the technical solution. Professionals and technicians can use a different method for each specific application to implement the described functions, but such implementation should not be considered as going beyond the scope of the present application.

An embodiment of the present application also provides a computer storage medium, where the computer storage medium stores a computer program for electronic data exchange, and the computer program enables a computer to execute part or all of the steps of any method as recorded in the above method embodiments, and the above-mentioned computer includes an electronic device.

An embodiment of the present application also provides a computer program product, which includes a non-transitory computer-readable storage medium storing a computer program, and the above-mentioned computer program is operable to enable a computer to execute part or all of the steps of any method as recorded in the above-mentioned method embodiments. The computer program product may be a software installation package, and the above-mentioned computer includes an electronic device.

The above disclosures are only part of the embodiments of the present application, and of course, the scope of claims of the present application cannot be limited by this. Those of ordinary skill in the art can understand that all or part of the processes for realizing the foregoing embodiments, and equivalent changes made in accordance with the claims of the present application, still fall within the scope of the present application.

## Claims

1. An information indication method applied to a terminal comprising at least one first identification card corresponding to a first network and at least one second identification card corresponding to a second network, comprising:
if a conversion of an operating network from a first network of a first identification card to a second network of a second identification card is detected, generating (201, 401) conversion indication information according to the conversion of the operating network, wherein the conversion indication information is used to indicate that an operating network conversion event occurs on the terminal; and
sending (202, 402) the conversion indication information to a base station;
wherein the conversion indication information comprises any one or more of the following: an operating network conversion indication, an operating network conversion reason, an expected operating network conversion duration, a priority for triggering a conversion service, a type for triggering a conversion service, a connection maintaining request indication, and network information on another operating network to be converted.

2. The method according to claim 1, further comprising:
sending UE capability reporting information to the base station,
preferably, the UE capability reporting information comprises any one or more of the following: a number of identification cards in the terminal, radio frequency information of the terminal, and an information list of the operating network.

3. The method according to claim 1 or 2, wherein after the conversion of the operating network is detected, the method further comprises:
obtaining a conversion duration of the operating network;
the generating the conversion indication information according to the conversion of the operating network comprises:
if the conversion duration of the operating network is greater than or equal to a first time threshold, generating the conversion indication information according to the conversion of the operating network; and/or
if the conversion duration of the operating network is less than the first time threshold, not generating the conversion indication information.

4. The method according to claim 1 or 2, wherein after the conversion of the operating network is detected, the method further comprises:
obtaining a priority of a conversion service, wherein the conversion service is a service performed after the terminal converts the operating network;
the generating the conversion indication information according to the conversion of the operating network comprises:
if the priority of the conversion service is greater than a priority of a current service, generating the conversion indication information according to the conversion of the operating network; and/or
if the priority of the conversion service is less than or equal to a priority of a current service, not generating the conversion indication information.

5. The method according to claim 1 or 2, wherein after the conversion of the operating network is detected, the method further comprises:
obtaining type information of a conversion service, wherein the conversion service is a service performed after the terminal converts the operating network;
the generating the conversion indication information according to the conversion of the operating network comprises:
if the type of the conversion service is a specific service type, generating the conversion indication information according to the conversion of the operating network; and/or
if the type of the conversion service is a non-specific service type, not generating the conversion indication information,
preferably, the type information of the conversion service comes from a configuration by the base station;
wherein the specific service type and the non-specific service type are pre-classified according to certain standards or pre-configured by the base station.

6. The method according to claim 1 or 2, wherein after the conversion of the operating network is detected, the method further comprises:
obtaining an operating network conversion reason;
the generating the conversion indication information according to the conversion of the operating network comprises:
if the operating network conversion reason is a specific reason type, generating the conversion indication information according to the conversion of the operating network; and/or
if the operating network conversion reason is a non-specific reason type, not generating the conversion indication information,
preferably, the type information of the operating network conversion reason comes from a configuration by the base station;
wherein the specific operating network conversion reason type and the non-specific operating network conversion reason type are established according to different standards or configured by the base station.

7. The method according to claim 1 or 2, wherein after the conversion of the operating network is detected, the method further comprises:
obtaining a time interval between the conversion of the operating network and a previous conversion;
the generating the conversion indication information according to the conversion of the operating network comprises:
if the time interval is greater than or equal to a second time threshold, generating the conversion indication information according to the conversion of the operating network; and/or
if the time interval is less than the second time threshold, not generating the conversion indication information.

8. The method according to claim 1 or 2, wherein after the conversion of the operating network is detected, the method further comprises:
starting a timer, and pre-setting that, after a timing of the timer changes T0, the timer is temporally reset to an initial state and the timing is stopped;
if the conversion of the operating network is obtained again, obtaining a state of the timer;
if the timer is in a timing stopping state, generating the conversion indication information according to the conversion of the operating network, and sending the conversion indication information to the base station; and/or
if the timer is in a running state, not sending the conversion indication information.

9. An information indication method, comprising:
receiving (301) conversion indication information, wherein the conversion indication information is sent by a terminal and is used to indicate that an operating network conversion event from a first network of a first identification card to a second network of a second identification card occurs on the terminal;
wherein the conversion indication information comprises any one or more of the following: an operating network conversion indication, an operating network conversion reason, an operating network conversion duration, a priority of a conversion service, a type for triggering a conversion service, a connection maintaining request indication, and network information on another operating network to be converted.

10. The method according to claim 9, wherein after the receiving the conversion indication information, the method further comprises:
adjusting (302, 403) a communication state of the terminal according to the conversion indication information,
preferably, after the adjusting the communication state of the terminal according to the conversion indication information, the method further comprises:
sending (404) operating network conversion confirmation information to the terminal.

11. The method according to claim 9 or 10, further comprising:
receiving UE capability reporting information of the terminal,
preferably, the UE capability reporting information comprises any one or more of the following: a number of identification cards in the terminal, radio frequency information of the terminal, and an information list of the operating network.

12. The method according to claim 10, wherein the adjusting the communication state of the terminal comprises at least one of the following:
adjusting the communication state of the terminal to a first state, wherein the first state is a communication connection maintaining state;
adjusting the communication state of the terminal to a second state, wherein the second state is an inactive state; and
adjusting the communication state of the terminal to a third state, wherein the third state is a connection release state,
preferably, the conversion indication information comprises an operating network conversion duration, after the adjusting the communication state of the terminal to the third state, the method further comprises:
generating connection indication information according to the conversion duration, wherein the connection indication information is used to indicate a communication connection re-establishment with the operating network by the terminal after an arrival to the conversion duration.

13. The method according to claim 10, wherein the conversion indication information comprises a connection maintaining request indication, the adjusting the communication state of the terminal according to the conversion indication information comprises:
maintaining a communication connected state with the terminal according to the connection maintaining request indication.

14. A terminal (500) that comprises at least one first identification card corresponding to a first network and at least one second identification card corresponding to a second network, and comprises a processing unit (510) and a communication unit (520), wherein
the processing unit is configured to generate conversion indication information if a conversion instruction of an operating card is detected, the conversion indication information is used to indicate that an operating network conversion event from a first network of a first identification card to a second network of a second identification card occurs on the terminal (500); and
the communication unit (520) is configured to send the conversion indication information to a base station;
wherein the conversion indication information comprises any one or more of the following: an operating network conversion indication, an operating network conversion reason, an expected operating network conversion duration, a priority for triggering a conversion service, a type for triggering a conversion service, a connection maintaining request indication, and network information on another operating network to be converted.

15. The terminal (500) according to claim 14, wherein the processing unit (510), after the conversion of the operating network is detected, is further configured to:
obtain a conversion duration of the operating network;
the generating the conversion indication information according to the conversion of the operating network comprises:
if the conversion duration of the operating network is greater than or equal to a first time threshold, generate the conversion indication information according to the conversion of the operating network; and/or
if the conversion duration of the operating network is less th
an the first time threshold, not generate the conversion indication information.

16. A base station (600), comprising a processing unit (610) and a communication unit (620), wherein
the communication unit (620) is configured to receive conversion indication information, the conversion indication information is sent by a terminal and is used to indicate that an operating network conversion event from a first network of a first identification card to a second network of a second identification card occurs on the terminal;
wherein the conversion indication information comprises any one or more of the following: an operating network conversion indication, an operating network conversion reason, an expected operating network conversion duration, a priority for triggering a conversion service, a type for triggering a conversion service, a connection maintaining request indication, and network information on another operating network to be converted.

17. The base station (600) according to claim 16, wherein after the receiving the conversion indication information, the processing unit (610) is further configured to:
adjust a communication state of the terminal according to the conversion indication information,
preferably, after the adjusting the communication state of the terminal according to the conversion indication information, the communication unit (620) is further configured to:
send operating network conversion confirmation information to the terminal.

18. An electronic device (700), comprising a processor (710), a memory (720), and one or more programs (721), wherein the one or more programs (721) are stored in the memory (720) and are configured to be executed by the processor (710), and the program (721) comprises instructions for executing the steps in the method according to any one of claims 1-13.

19. A computer-readable storage medium, storing a computer program for electronic data exchange, wherein the computer program enables a computer to execute the method according to any one of claims 1-13.

## Patentansprüche

1. Informationsanzeigeverfahren, das auf ein Endgerät angewendet wird, das mindestens eine erste Identifikationskarte, die einem ersten Netzwerk entspricht, und mindestens eine zweite Identifikationskarte, die einem zweiten Netzwerk entspricht, umfasst, umfassend:
wenn eine Umstellung eines Betriebsnetzwerks von einem ersten Netzwerk einer ersten Identifikationskarte auf ein zweites Netzwerk einer zweiten Identifikationskarte erkannt wird, Erzeugen (201, 401) von Umstellungsanzeigeinformationen entsprechend der Umstellung des Betriebsnetzwerks, wobei die Umstellungsanzeigeinformationen verwendet werden, um anzuzeigen, dass ein Betriebsnetzwerk-Umstellungsereignis auf dem Endgerät auftritt; und
Senden (202, 402) der Umstellungsanzeigeinformationen an eine Basisstation;
wobei die Umstellungsanzeigeinformationen eines oder mehrere des Folgenden umfassen: eine Betriebsnetzwerk-Umstellungsanzeige, einen Betriebsnetzwerk-Umstellungsgrund, eine erwartete Betriebsnetzwerk-Umstellungsdauer, eine Priorität zum Auslösen eines Umstellungsdienstes, einen Typ zum Auslösen eines Umstellungsdienstes, eine Verbindungsbeibehaltungs-Anforderungsanzeige und Netzwerkinformationen über ein anderes umzustellendes Betriebsnetzwerk.

2. Verfahren nach Anspruch 1, ferner umfassend:
Senden von UE-Leistungsbericht-Informationen an die Basisstation,
wobei die UE-Leistungsbericht-Informationen vorzugsweise eines oder mehrere der Folgenden umfassen: eine Anzahl von Identifikationskarten in dem Endgerät, Funkfrequenzinformationen des Endgeräts und eine Informationsliste des Betriebsnetzwerks.

3. Verfahren nach Anspruch 1 oder 2, wobei das Verfahren nach dem Erfassen der Umstellung des Betriebsnetzwerks ferner Folgendes umfasst:
Beziehen einer Umstellungsdauer des Betriebsnetzwerks;
wobei das Erzeugen der Umstellungsanzeigeinformationen gemäß der Umstellung des Betriebsnetzwerks Folgendes umfasst:
wenn die Umstellungsdauer des Betriebsnetzwerks länger oder gleich einem ersten Zeitschwellenwert ist, Erzeugen der Umstellungsanzeigeinformationen gemäß der Umstellung des Betriebsnetzwerks; und/oder
wenn die Umstellungsdauer des Betriebsnetzwerks kürzer als der erste Zeitschwellenwert ist, Nicht-Erzeugen der Umstellungsanzeigeinformationen.

4. Verfahren nach Anspruch 1 oder 2, wobei das Verfahren nach dem Erfassen der Umstellung des Betriebsnetzwerks ferner Folgendes umfasst:
Erhalten einer Priorität eines Umstellungsdienstes, wobei der Umstellungsdienst ein Service ist, der ausgeführt wird, sobald das Endgerät das Betriebsnetzwerk umgestellt hat;
wobei das Erzeugen der Umstellungsanzeigeinformationen gemäß der Umstellung des Betriebsnetzwerks Folgendes umfasst:
wenn die Priorität des Umstellungsdienstes höher als eine Priorität eines aktuellen Dienstes ist, Erzeugen der Umstellungsanzeigeinformationen gemäß der Umstellung des Betriebsnetzwerks; und/oder
wenn die Priorität des Umstellungsdienstes niedriger oder gleich einer Priorität eines aktuellen Dienstes ist, Nicht-Erzeugen der Umstellungsanzeigeinformationen.

5. Verfahren nach Anspruch 1 oder 2, wobei das Verfahren nach dem Erfassen der Umstellung des Betriebsnetzwerks ferner Folgendes umfasst:
Erhalten von Typinformationen eines Umstellungsdienstes, wobei der Umstellungsdienst ein Service ist, der durchgeführt wird, sobald das Endgerät das Betriebsnetzwerk umgestellt hat;
wobei das Erzeugen der Umstellungsanzeigeinformationen gemäß der Umstellung des Betriebsnetzwerks Folgendes umfasst:
wenn der Typ des Umstellungsdienstes ein bestimmter Diensttyp ist, Erzeugen der Umstellungsanzeigeinformationen gemäß der Umstellung des Betriebsnetzwerks; und/oder
wenn der Typ des Umstellungsdienstes ein unspezifischer Diensttyp ist, Nicht-Erzeugen der Umstellungsanzeigeinformationen,
vorzugsweise stammen die Typinformationen des Umstellungsdienstes aus einer Konfiguration durch die Basisstation;
wobei der spezifische Diensttyp und der unspezifische Diensttyp gemäß bestimmten Standards vorklassifiziert oder durch die Basisstation vorkonfiguriert sind.

6. Verfahren nach Anspruch 1 oder 2, wobei das Verfahren nach dem Erfassen der Umstellung des Betriebsnetzwerks ferner Folgendes umfasst:
Erhalten eines Betriebsnetzwerk-Umstellungsgrundes;
wobei das Erzeugen der Umstellungsanzeigeinformationen gemäß der Umstellung des Betriebsnetzwerks Folgendes umfasst:
wenn der Umstellungsgrund des Betriebsnetzwerks ein bestimmter Grundtyp ist, Erzeugen der Umstellungsanzeigeinformationen gemäß der Umstellung des Betriebsnetzwerks; und/oder
wenn der Umstellungsgrund des Betriebsnetzwerks ein unspezifischer Grundtyp ist, Nicht-Erzeugen der Umstellungsanzeigeinformationen,
vorzugsweise stammt die Typinformation des Betriebsnetzwerk-Umstellungsgrundes von einer Konfiguration durch die Basisstation;
wobei der spezifische Betriebsnetzwerk-Umstellungsgrundtyp und der unspezifische Betriebsnetzwerk-Umstellungsgrundtyp gemäß unterschiedlichen Standards festgelegt oder durch die Basisstation konfiguriert sind.

7. Verfahren nach Anspruch 1 oder 2, wobei das Verfahren nach dem Erfassen der Umstellung des Betriebsnetzwerks ferner Folgendes umfasst:
Erhalten eines Zeitintervalls zwischen der Umstellung des Betriebsnetzwerks und einer vorherigen Umstellung;
wobei das Erzeugen der Umstellungsanzeigeinformationen gemäß der Umstellung des Betriebsnetzwerks Folgendes umfasst:
wenn das Zeitintervall größer oder gleich einem zweiten Zeitschwellenwert ist, Erzeugen der Umstellungsanzeigeinformationen gemäß der Umstellung des Betriebsnetzwerks; und/oder
wenn das Zeitintervall kleiner als der zweite Zeitschwellenwert ist, Nicht-Erzeugen der Umstellungsanzeigeinformationen.

8. Verfahren nach Anspruch 1 oder 2, wobei das Verfahren nach dem Erfassen der Umstellung des Betriebsnetzwerks ferner Folgendes umfasst:
Starten eines Zeitgebers und Voreinstellen, dass der Zeitgeber, nach einer Zeitberechnung des Zeitgebers T0 zeitlich auf einen Anfangsstatus zurückgesetzt wird und die Zeitberechnung gestoppt wird;
wenn die Umstellung des Betriebsnetzwerks erneut erhalten wird, Erhalten eines Status des Zeitgebers;
wenn sich der Zeitgeber in einem Zeitberechnungs-Stoppstatus befindet, Erzeugen der Umstellungsanzeigeinformationen gemäß der Umstellung des Betriebsnetzwerks und Senden der Umstellungsanzeigeinformationen an die Basisstation; und/oder
wenn sich der Zeitgeber in einem Laufstatus befindet, Nicht-Senden der Umstellungsanzeigeinformationen.

9. Informationsanzeigeverfahren, umfassend:
Empfangen (301) von Umstellungsanzeigeinformationen, wobei die Umstellungsanzeigeinformationen von einem Endgerät gesendet und verwendet werden, um anzugeben, dass ein Betriebsnetzwerk-Umstellungsereignis von einem ersten Netzwerk einer ersten Identifikationskarte zu einem zweiten Netzwerk einer zweiten Identifikationskarte auf dem Endgerät auftritt;
wobei die Umstellungsanzeigeinformationen eines oder mehrere der Folgenden umfassen: eine Betriebsnetzwerk-Umstellungsanzeige, einen Betriebsnetzwerk-Umstellungsgrund, eine Betriebsnetzwerk-Umstellungsdauer, eine Priorität eines Umstellungsdienstes, einen Typ zum Auslösen eines Umstellungsdienstes, eine Anzeige einer Verbindungsbeibehaltungsanforderung und Netzwerkinformationen zu einem anderen umzustellenden Betriebsnetzwerk.

10. Verfahren nach Anspruch 9, wobei das Verfahren nach dem Empfangen der Umstellungsanzeigeinformationen ferner Folgendes umfasst:
Einstellen (302, 403) eines Kommunikationsstatus des Endgeräts gemäß den Umstellungsanzeigeinformationen,
wobei nach dem Einstellen des Kommunikationsstatus des Endgeräts gemäß den Umstellungsanzeigeinformationen das Verfahren ferner vorzugsweise Folgendes umfasst:
Senden (404) von Betriebsnetzwerk-Umstellungsbestätigungsinformationen an das Endgerät.

11. Verfahren nach Anspruch 9 oder 10, ferner umfassend: Empfangen von UE-Leistungsbericht-Informationen des Endgeräts,
wobei die UE-Leistungsbericht-Informationen vorzugsweise eines oder mehrere der Folgenden umfassen: eine Anzahl von Identifikationskarten in dem Endgerät, Funkfrequenzinformationen des Endgeräts und eine Informationsliste des Betriebsnetzwerks.

12. Verfahren nach Anspruch 10, wobei das Einstellen des Kommunikationsstatus des Endgeräts mindestens eines der Folgenden umfasst:
Einstellen des Kommunikationsstatus des Endgeräts auf einen ersten Status, wobei der erste Status ein Kommunikationsverbindungs-Beibehaltungsstatus ist;
Einstellen des Kommunikationsstatus des Endgeräts auf einen zweiten Status, wobei der zweite Status ein inaktiver Status ist; und
Einstellen des Kommunikationsstatus des Endgeräts auf einen dritten Status, wobei der dritte Status ein Verbindungsfreigabestatus ist,
wobei die Umstellungsanzeigeinformationen vorzugsweise eine Betriebsnetzwerk-Umstellungsdauer nach dem Einstellen des Kommunikationsstatus des Endgeräts auf den dritten Status umfassen, das Verfahren ferner umfassend:
Erzeugen von Verbindungsanzeigeinformationen entsprechend der Umstellungsdauer, wobei die Verbindungsanzeigeinformationen verwendet werden, um eine Wiederherstellung der Kommunikationsverbindung mit dem Betriebsnetzwerk durch das Endgerät nach Ablauf der Umstellungsdauer anzuzeigen.

13. Verfahren nach Anspruch 10, wobei die Umstellungsanzeigeinformationen eine Anzeige der Verbindungsbeibehaltungsanforderung umfassen und das Einstellen des Kommunikationsstatus des Endgeräts gemäß den Umstellungsanzeigeinformationen Folgendes umfasst:
Beibehalten eines Kommunikationsverbindungsstatus mit dem Endgerät gemäß der Anzeige der Verbindungsbeibehaltungsanforderung.

14. Endgerät (500), das mindestens eine erste Identifikationskarte, die einem ersten Netzwerk entspricht, und mindestens eine zweite Identifikationskarte, die einem zweiten Netzwerk entspricht, und eine Verarbeitungseinheit (510) und eine Kommunikationseinheit (520) umfasst, wobei
die Verarbeitungseinheit konfiguriert ist, Umstellungsanzeigeinformationen zu erzeugen, wenn eine Umstellungsanweisung einer in Betrieb befindlichen Karte erkannt wird, die Umstellungsanzeigeinformationen verwendet werden, um anzugeben, dass ein Betriebsnetzwerk-Umstellungsereignis von einem ersten Netzwerk einer ersten Identifikationskarte zu einem zweiten Netzwerk einer zweiten Identifikationskarte auf dem Endgerät (500) auftritt; und
die Kommunikationseinheit (520) dazu konfiguriert ist, die Umstellungsanzeigeinformationen an eine Basisstation zu senden;
wobei die Umstellungsanzeigeinformationen eines oder mehrere der Folgenden umfassen: eine Betriebsnetzwerk-Umstellungsanzeige, einen Betriebsnetzwerk-Umstellungsgrund, eine erwartete Betriebsnetzwerk-Umstellungsdauer, eine Priorität zum Auslösen eines Umstellungsdienstes, einen Typ zum Auslösen eines Umstellungsdienstes, eine Anzeige einer Verbindungsbeibehaltungsanforderung und Netzwerkinformationen zu einem anderen umzustellenden Betriebsnetzwerk.

15. Endgerät (500) nach Anspruch 14, wobei die Verarbeitungseinheit (510), nach Erfassen der Umstellung des Betriebsnetzwerks, ferner zu Folgendem konfiguriert ist:
Erhalten einer Umstellungsdauer des Betriebsnetzwerks;
wobei das Erzeugen der Umstellungsanzeigeinformationen gemäß der Umstellung des Betriebsnetzwerks Folgendes umfasst:
wenn die Umstellungsdauer des Betriebsnetzwerks länger oder gleich einem ersten Zeitschwellenwert ist, Erzeugen der Umstellungsanzeigeinformationen gemäß der Umstellung des Betriebsnetzwerks; und/oder
wenn die Umstellungsdauer des Betriebsnetzwerks kürzer als der erste Zeitschwellenwert ist, Nicht-Erzeugen der Umstellungsanzeigeinformationen.

16. Basisstation (600), umfassend eine Verarbeitungseinheit (610) und eine Kommunikationseinheit (620), wobei
die Kommunikationseinheit (620) konfiguriert ist, Umstellungsanzeigeinformationen zu empfangen, die Umstellungsanzeigeinformationen von einem Endgerät gesendet und verwendet werden, um anzugeben, dass ein Betriebsnetzwerk-Umstellungsereignis von einem ersten Netzwerk einer ersten Identifikationskarte zu einem zweiten Netzwerk einer zweiten Identifikationskarte auf dem Endgerät auftritt;
wobei die Umstellungsanzeigeinformationen eines oder mehrere der Folgenden umfassen: eine Betriebsnetzwerk-Umstellungsanzeige, einen Betriebsnetzwerk-Umstellungsgrund, eine erwartete Betriebsnetzwerk-Umstellungsdauer, eine Priorität zum Auslösen eines Umstellungsdienstes, einen Typ zum Auslösen eines Umstellungsdienstes, eine Anzeige einer Verbindungsbeibehaltungsanforderung und Netzwerkinformationen zu einem anderen umzustellenden Betriebsnetzwerk.

17. Basisstation (600) nach Anspruch 16, wobei die Verarbeitungseinheit (610) nach dem Empfangen der Umstellungsanzeigeinformationen ferner zu Folgendem konfiguriert ist:
Einstellen eines Kommunikationsstatus des Endgeräts gemäß den Umstellungsanzeigeinformationen,
wobei die Kommunikationseinheit (620) nach dem Einstellen des Kommunikationsstatus des Endgeräts gemäß den Umstellungsanzeigeinformationen ferner vorzugsweise zu Folgendem konfiguriert ist:
Senden von Bestätigungsinformationen zu einer Betriebsnetzwerkumstellung an das Endgerät.

18. Elektronische Vorrichtung (700), umfassend einen Prozessor (710), einen Speicher (720) und ein oder mehrere Programme (721), wobei das eine oder die mehreren Programme (721) in dem Speicher (720) gespeichert und dazu konfiguriert sind, von dem Prozessor (710) ausgeführt zu werden, und das Programm (721) Anweisungen zum Ausführen der Schritte in dem Verfahren nach einem der Ansprüche 1 bis 13 umfasst.

19. Computerlesbares Speichermedium, das ein Computerprogramm für den elektronischen Datenaustausch speichert, wobei das Computerprogramm es einem Computer ermöglicht, das Verfahren nach einem der Ansprüche 1 bis 13 auszuführen.

## Revendications

1. Un procédé d'indication d'informations appliqué à un terminal comprenant au moins une première carte d'identification correspondant à un premier réseau et au moins une seconde carte d'identification correspondant à un second réseau, comprenant :
si une conversion d'un réseau d'exploitation d'un premier réseau d'une première carte d'identification à un second réseau d'une seconde carte d'identification est détectée, la génération (201, 401) d'informations d'indication de conversion selon la conversion du réseau d'exploitation, les informations d'indication de conversion étant utilisées pour indiquer qu'un événement de conversion de réseau d'exploitation se produit sur le terminal ; et
l'envoi (202, 402) des informations d'indication de conversion à une station de base ;
les informations d'indication de conversion comprenant un ou plusieurs des éléments suivants : une indication de conversion de réseau d'exploitation, un motif de conversion de réseau d'exploitation, une durée de conversion de réseau d'exploitation attendue, une priorité pour déclencher un service de conversion, un type pour déclencher un service de conversion, une indication de demande de maintien de connexion et des informations de réseau sur un autre réseau d'exploitation à convertir.

2. Procédé selon la revendication 1, comprenant en outre :
l'envoi d'informations de rapport de capacité d'UE à la station de base,
de préférence, les informations de rapport de capacité d'UE comprenant un ou plusieurs des éléments suivants : un certain nombre de cartes d'identification dans le terminal, des informations de fréquence radio du terminal et une liste d'informations du réseau d'exploitation.

3. Le procédé selon la revendication 1 ou 2, dans lequel, après la détection de la conversion du réseau d'exploitation, le procédé comprend en outre :
**l'obtention** d'une durée de conversion du réseau d'exploitation ;
la génération des informations d'indication de conversion en fonction de la conversion du réseau d'exploitation comprenant :
si la durée de conversion du réseau d'exploitation est supérieure ou égale à un premier seuil temporel, la génération des informations d'indication de conversion en fonction de la conversion du réseau d'exploitation ; et/ou
si la durée de conversion du réseau d'exploitation est inférieure au premier seuil temporel, la non-génération des informations d'indication de conversion.

4. Procédé selon la revendication 1 ou 2, dans lequel, après la détection de la conversion du réseau d'exploitation, le procédé comprend en outre :
l'obtention d'une priorité d'un service de conversion, le service de conversion étant un service effectué après la conversion du réseau d'exploitation par le terminal ;
la génération des informations d'indication de conversion en fonction de la conversion du réseau d'exploitation comprenant :
si la priorité du service de conversion est supérieure à une priorité d'un service en cours, la génération des informations d'indication de conversion en fonction de la conversion du réseau d'exploitation ; et/ou
si la priorité du service de conversion est inférieure ou égale à une priorité d'un service en cours, la non-génération des informations d'indication de conversion.

5. Le procédé selon la revendication 1 ou 2, dans lequel, après la détection de la conversion du réseau d'exploitation, le procédé comprend en outre :
l'obtention des informations de type d'un service de conversion, le service de conversion étant un service effectué après la conversion du réseau d'exploitation par le terminal ;
la génération des informations d'indication de conversion en fonction de la conversion du réseau d'exploitation comprenant :
si le type de service de conversion est un type de service spécifique, la génération des informations d'indication de conversion en fonction de la conversion du réseau d'exploitation ; et/ou
si le type du service de conversion est un type de service non spécifique, la non-génération des informations d'indication de conversion,
de préférence, les informations de type du service de conversion provenant d'une configuration par la station de base ;
le type de service spécifique et le type de service non spécifique étant préclassifiés selon certaines normes ou préconfigurés par la station de base.

6. Procédé selon la revendication 1 ou 2, dans lequel, après la détection de la conversion du réseau d'exploitation, le procédé comprend en outre :
l'obtention d'un motif de conversion de réseau d'exploitation ;
la génération des informations d'indication de conversion en fonction de la conversion du réseau d'exploitation comprenant :
si le motif de conversion de réseau d'exploitation est un type de motif spécifique, la génération des informations d'indication de conversion en fonction de la conversion du réseau d'exploitation ; et/ou
si le motif de conversion de réseau d'exploitation est un type de motif non spécifique, la non-génération des informations d'indication de conversion,
de préférence, les informations de type du motif de conversion de réseau d'exploitation provenant
d'une configuration par la station de base ;
le type de motif de conversion de réseau d'exploitation spécifique et le type de motif de conversion de réseau d'exploitation non spécifique étant établis selon différentes normes ou configurés par la station de base.

7. Procédé selon la revendication 1 ou 2, dans lequel, après la détection de la conversion du réseau d'exploitation, le procédé comprend en outre :
l'obtention d'un intervalle de temps entre la conversion du réseau d'exploitation et une conversion précédente ;
la génération des informations d'indication de conversion en fonction de la conversion du réseau d'exploitation comprenant :
si l'intervalle de temps est supérieur ou égal à un second seuil temporel, la génération des informations d'indication de conversion en fonction de la conversion du réseau d'exploitation ; et/ou
si l'intervalle de temps est inférieur au second seuil temporel, la non-génération des informations d'indication de conversion.

8. Le procédé selon la revendication 1 ou 2, dans lequel, après la détection de la conversion du réseau d'exploitation, le procédé comprend en outre :
le démarrage d'une minuterie, et le préréglage selon lequel, après qu'un minutage de la minuterie passe T0, la minuterie est temporairement remise à un état initial et la minuterie est arrêtée ;
si la conversion du réseau d'exploitation est à nouveau obtenue, l'obtention d'un état de la minuterie ;
si la minuterie est dans un état d'arrêt de minutage, la génération des informations d'indication de conversion en fonction de la conversion du réseau d'exploitation et l'envoi des informations d'indication de conversion à la station de base ; et/ou
si le minuteur est en cours d'exécution, le non-envoi des informations d'indication de conversion.

9. Un procédé d'indication d'informations, comprenant :
la réception (301) d'informations d'indication de conversion, les informations d'indication de conversion étant envoyées par un terminal et étant utilisées pour indiquer qu'un événement de conversion de réseau d'exploitation d'un premier réseau d'une première carte d'identification à un second réseau d'une seconde carte d'identification se produit sur le terminal ;
les informations d'indication de conversion comprenant un ou plusieurs des éléments suivants : une indication de conversion de réseau d'exploitation, un motif de conversion de réseau d'exploitation, une durée de conversion de réseau d'exploitation, une priorité d'un service de conversion, un type pour déclencher un service de conversion, une indication de demande de maintien de connexion, et des informations de réseau sur un autre réseau d'exploitation à convertir.

10. Le procédé selon la revendication 9, dans lequel, après la réception des informations d'indication de conversion, le procédé comprend en outre :
l'ajustement (302, 403) d'un état de communication du terminal en fonction des informations d'indication de conversion,
de préférence, après l'ajustement de l'état de communication du terminal en fonction des informations d'indication de conversion, le procédé comprenant en outre :
l'envoi (404) d'informations de confirmation de conversion de réseau d'exploitation au terminal.

11. Le procédé selon la revendication 9 ou 10, comprenant en outre : la réception d'informations de rapport de capacité d'UE du terminal,
de préférence, les informations de rapport de capacité d'UE comprenant un ou plusieurs des éléments suivants : un certain nombre de cartes d'identification dans le terminal, des informations de fréquence radio du terminal et une liste d'informations du réseau d'exploitation.

12. Le procédé selon la revendication 10, dans lequel l'ajustement de l'état de communication du terminal comprend au moins l'un des ajustements suivants :
l'ajustement de l'état de communication du terminal à un premier état, le premier état étant un état de maintien de connexion de communication ;
l'ajustement de l'état de communication du terminal à un second état, le second état étant un état inactif ; et
l'ajustement de l'état de communication du terminal à un troisième état, le troisième état étant un état de libération de connexion,
de préférence, les informations d'indication de conversion comprenant une durée de conversion de réseau d'exploitation, après l'ajustement de l'état de communication du terminal au troisième état, le procédé comprenant en outre :
la génération d'informations d'indication de connexion en fonction de la durée de conversion, les informations d'indication de connexion étant utilisées pour indiquer un rétablissement de connexion de communication avec le réseau d'exploitation par le terminal après écoulement de la durée de conversion.

13. Procédé selon la revendication 10, dans lequel les informations d'indication de conversion comprennent une indication de demande de maintien de connexion, l'ajustement de l'état de communication du terminal en fonction des informations d'indication de conversion comprenant :
le maintien d'un état de connexion de communication avec le terminal en fonction de l'indication de demande de maintien de connexion.

14. Un terminal (500) qui comprend au moins une première carte d'identification correspondant à un premier réseau et au moins une seconde carte d'identification correspondant à un second réseau, et comprend une unité de traitement (510) et une unité de communication (520),
l'unité de traitement étant configurée pour générer des informations d'indication de conversion si une instruction de conversion d'une carte d'exploitation est détectée, les informations d'indication de conversion étant utilisées pour indiquer qu'un événement de conversion de réseau d'exploitation d'un premier réseau d'une première carte d'identification à un second réseau d'une seconde carte d'identification se produit sur le terminal (500) ; et
l'unité de communication (520) étant configurée pour envoyer les informations d'indication de conversion à une station de base ;
les informations d'indication de conversion comprenant un ou plusieurs des éléments suivants : une indication de conversion de réseau d'exploitation, un motif de conversion de réseau d'exploitation, une durée de conversion de réseau d'exploitation attendue, une priorité pour déclencher un service de conversion, un type pour déclencher un service de conversion, une indication de demande de maintien de connexion, et des informations de réseau sur un autre réseau d'exploitation à convertir.

15. Le terminal (500) selon la revendication 14, dans lequel l'unité de traitement (510), après la détection de la conversion du réseau d'exploitation, est en outre configurée pour :
obtenir une durée de conversion du réseau d'exploitation ;
la génération des informations d'indication de conversion en fonction de la conversion du réseau d'exploitation comprenant :
si la durée de conversion du réseau d'exploitation est supérieure ou égale à un premier seuil temporel, la génération des informations d'indication de conversion en fonction de la conversion du réseau d'exploitation ; et/ou
si la durée de conversion du réseau d'exploitation est inférieure au premier seuil temporel, la non-génération des informations d'indication de conversion.

16. Station de base (600), comprenant une unité de traitement (610) et une unité de communication (620),
l'unité de communication (620) étant configurée pour recevoir des informations d'indication de conversion, les informations d'indication de conversion étant envoyées par un terminal et étant utilisées pour indiquer qu'un événement de conversion de réseau d'exploitation d'un premier réseau d'une première carte d'identification à un second réseau d'une seconde carte d'identification se produit sur le terminal ;
les informations d'indication de conversion comprenant un ou plusieurs des éléments suivants : une indication de conversion de réseau d'exploitation, un motif de conversion de réseau d'exploitation, une durée de conversion de réseau d'exploitation attendue, une priorité pour déclencher un service de conversion, un type pour déclencher un service de conversion, une indication de demande de maintien de connexion, et des informations de réseau sur un autre réseau d'exploitation à convertir.

17. La station de base (600) selon la revendication 16, dans laquelle, après la réception des informations d'indication de conversion, l'unité de traitement (610) est en outre configurée pour :
ajuster un état de communication du terminal en fonction des informations d'indication de conversion,
de préférence, après l'ajustement de l'état de communication du terminal en fonction des informations d'indication de conversion, l'unité de communication (620) étant en outre configurée pour :
envoyer des informations de confirmation de conversion de réseau d'exploitation au terminal.

18. Un dispositif électronique (700), comprenant un processeur (710), une mémoire (720) et un ou plusieurs programmes (721), le ou les programmes (721) étant stockés dans la mémoire (720) et étant configurés pour être exécutés par le processeur (710), et le programme (721) comprenant des instructions pour exécuter les étapes du procédé selon l'une quelconque des revendications 1 à 13.

19. Un support de stockage lisible par ordinateur, stockant un programme informatique pour l'échange de données électroniques, le programme informatique permettant à un ordinateur d'exécuter le procédé selon l'une quelconque des revendications 1 à 13.
